# EUROPEAN PATENT APPLICATION

(11) **EP 1 865 448 A1**
(43) Date of publication of application: **12.12.2007**
(21) Application number: 06011588.8
(22) Date of filing: 05.06.2006
(51) Int. Cl.: G06Q 10/00

(54) **Provisioning and activation using a service catalog**

(71) Applicant: Comptel Corporation, 00100 Helsinki (FI)
(72) Inventor: Huuhtanen, Jarkko, 00810 Helsinki (FI); Vormisto, Harri, 00530 Helsinki (FI)
(74) Representative: Tiilikainen, Jarkko Tapio

(57) **Abstract**

A service provisioning and activation method and system for telecommunications networks. The system operates in between a business support system (400) and a plurality of network elements (480) and comprises a service repository (450) containing service configuration data. The system comprises also an order management component (410), which includes a generic logic (412) for service provisioning and activation operations, and an operation specific functionalities module (414) comprising operation specific functionalities capable of using data from the service repository (450). The order management component (410) receives a requests from the business support system (400) and processes it according to the generic logic (412) calling the operation specific functionalities in the operation specific functionalities module (414). By means of this configuration, the system can perform a request-specific series of operations based on the received request and the data from the service repository, without the need of programming individual workflows for each different service activation, deactivation and modification situation possible in the telecommunications network.

## Description

### Technical Field

The present invention relates to provisioning and activation of services used in telecommunication systems.

The present invention relates also to service provisioning and activation systems in a telecommunications network. Such systems are typically connected to business support systems (BSS) and network elements of the telecommunications network, and their function is to make the telecommunications network provide the services that have been requested by the business support systems.

The present invention relates also to computer program products used to control computers in service provisioning and activation systems.

Among new communication networks rising as 3G, Next Generation Networks, all-IP, IP Multimedia Subsystem (IMS), etc. the amount of sellable products and services in operators' supply is increasing rapidly. This challenges operators' Operation and Support Systems (OSS) by significantly increased amount of network elements and services offered by network elements in operators' network to be managed. The operation and support systems (OSS) are sometimes called also as business support systems (BSS). In modem networks, activation and provisioning requests are more complex touching multiple network elements or services. Furthermore, the complex requests and multitask executions to network elements are tied with certain relations that have to be managed properly. From the competitive point of view, rapid service configuration and change management gives operators competitive edge. It is possible that in case the number of manageable service configurations grows over tens or even hundreds, the operator's current systems are not flexible enough to support large number of service configurations, or number of possible service combinations becomes un-manageable.

### Background Art

US 6879679 discloses a method to analyze telecommunications network to result in creating a provisioning plan for provisioning the network to provide services for one or more subscribers. Such a method is very useful for a service provisioning and activation system even though the publication is silent as to how the service provisioning and activation itself could be performed in an efficient way.

WO 2005/018249 discloses a system to manage telephony network. The focus of this publication is on the physical element management and network element configuration. The described solution has workflows defined on all the different service levels. Such workflows have to be predefined and they cannot be dynamically driven. This means that new provisioned products and their relations to network level services are pretty laborious to define.

### Disclosure of Invention

It is an object of the present invention to provide a new method and system for provisioning and activation of services used in telecommunication systems. Preferably, such a system would provide automatic, relatively fast and accurate provisioning and activation of services based on a provisioning or activation request from a business support system.

According to an aspect of the invention, there is provided a service provisioning and activation system in a telecommunications network, comprising a service repository for service configuration data and an order management component comprising a generic logic for service provisioning and activation operations. The system further comprises an operation specific functionalities module comprising operation specific functionalities capable of using data from the service repository. The service repository includes data on telecommunications products or services provided by the telecommunications network. The order management component is operative to receive a provisioning or activation request from a business support system and process the received request according to the generic logic. During such processing, the generic logic calls the operation specific functionalities in the operation specific functionalities module such that a request-specific series of operations is performed based on the received request and the data from the service repository.

According to another aspect of the invention, such a service provisioning and activation system is used to provide a business support system with a business-level view of the services in activated state for a subscription of interest in the telecommunications network.

According to a further aspect of the invention, the service provisioning and activation system is used to implement in the telecommunications network a business-level request from a business support system, the request concerning at least one change in the services provided for a subscription of interest.

According to another aspect of the invention, there is provided a method of operating the service provisioning and activation system in a telecommunications network. The method comprises receiving and interpreting a provisioning or activation request from a business support system, and responsive to the request, processing through the generic logic in the order management component based on the information in the request. The processing comprises calling operation specific functionalities in the operation specific functionalities module and making use of the service configuration data in the service repository via said called operation specific functionalities.

According to an aspect of the invention, there is also provided a computer program product comprising computer program code operable to instruct a computer system to perform the above-described method of operating the service provisioning and activation system.

The invention provides bases for embodiments that allow automatic, fast and accurate provisioning and activation of services based on a provisioning or activation request from a business support system.

There are several embodiments of the invention that accelerate and guarantee successful provisioning and activation of products and services offered by telecommunication operators and service providers.

Furthermore, the inventive concept allows several useful and advantageous embodiments, which provide numerous advantages.

An embodiment of the present invention allows creating a solution and product defining how decomposition from operator's sellable products can be made into technical services through a catalog and how this data can be used in order to automate provisioning of subscriber services. On other words, this means mapping of a generic technical service or capability (from a catalog) into network element specific executable operations into physical network elements (through provisioning system).

A solution according to the invention is acting as an activator and provisioning system between operator's business domain (BSS systems; CRM, Billing, etc.) and physical network that enables communications services to subscribers (Network Elements; HLR- , IMS-, VMS-, Fixed-, Ldap-, DSLAM-, router-, etc.). Furthermore, the solutions according to embodiments of the invention can cover more OSS functionality than the traditional provisioning solutions, so instead of being just an activator, these solutions can cover several intelligent functions on high level.

Embodiments of the invention can be used to model the mapping of operator's sellable products that are managed on the BSS systems, into technical service on the network layer. The mapping is done through service specification stored in the catalog. The content of service specification may be defined by a standard, e.g. Tele Management Forum's (TMF) Shared Information Data model (SID). Even if the standards define the data model, they don't define how the data should be used in order to support provisioning and activation process. The standard defines logical way to model communication services, which is needed in order to be able to model new services and sellable products in a fast way - this is essential in highly competed, changing business environment.

Challenge is to have a complete flow of data from the Business Support System (BSS) through order management, through technical flow, service decomposition through a service catalog, into activation and down to network elements. Embodiments of the present invention make it possible to construct a solution that enables complete provisioning solution with internal capabilities to change metadata between the entities describing the capabilities of each entity.

According to an embodiment of the present invention, it's possible to use data in the generic catalog to support activation and provisioning process by interpreting the lowest atomic entities from the catalog (technical services, ResourceFacingServices, technical features, technical capabilities, etc; the technical entities supported by the network and used to build up a sellable product configuration) into one or multiple provisioning system and network element specific tasks, which can be executed into the network elements in order to enable referred generic technical service on the network layer. The provisioning system implements the logical operations for the technical services and operation can be, as mentioned, one single executable task or set of tasks, which are driven by the operation specific technical workflow.

By modelling operations for each technical feature through provisioning-system-specific and network-element-interface-specific functionalities, it's possible to gain understanding for the provisioning system as to what to do when a set of technical features are referred by the BSS system through service decomposition. From the provisioning and activation point of view, it's not sufficient only to understand what implementation-specific-functionalities match into technical services, but also to understand the relations of the technical service sets to each others from the processing point of view (some technical service has to be processed before some other one). The relations between technical services are preferably stored in the context of catalog, and their purpose is to define in what order the technical services have to be processed. On the other hand, the technical services may have a relationship to each other; one does not work without another one. For example VoIP (Voice over IP) does not work if access (e.g. Cable broadband) is not also activated with the VoIP service.

Some embodiments of the invention go even further than the mapping of technical services into executable operations and understanding the relations between atomic operations. These embodiments aim at optimised processing (time and actions point of view) by optimising the number of executables. The mapping is provided with intelligence so that it can calculate the minimum operations to be executed (delta) for subscriptions of a subscriber. For example, a subscriber might have some technical services already active on the network layer because of old products and services assigned to him, thus only the non-activated set of technical services has to be processed compared to the old ones already active.

In an embodiment of the invention, wherein in case some operation fails and it's not possible to activate a set of technical services referred by the new product assigned with a subscriber, then provisioning system can use the data from the catalog to push subscriber into state he was before starting the activation of the new product. This is also called rollback. Also mass changes into service configuration can be rolled automatically on the network layer using the data from the catalog, e.g. in case a service configuration is changed that is already assigned to number of customers (e.g. a new service is assigned with a product that has been already activated to subscribers), the data in the catalog can be used to calculate the technical services that has to be activated in order to activate the new service for all subscribers already assigned with the product. For example 'Email' service is assigned into a 'Consumer broadband' product. The system according to the embodiment can calculate the technical services, for example 'Email basic service', that has to be activated to all subscribers having a subscription into 'Consumer broadband' product.

The service repository can be kept up-to-date all the time in an embodiment, wherein the system comprises an update functionality operable to update the service configuration data in the service repository in response to a successfully performed provisioning or activation operation. Then, also the status of products of a subscription can be updated in the catalog. This allows also a further embodiment, wherein the system informs the BSS system of the successfully performed provisioning or activation operation once this has been concluded.

An embodiment including a rollback functionality can successfully handle also problem situations, for example, in case there are problems in the execution of technical services. The rollback functionality can then restore the status of the subscription valid at the moment of receipt of the provisioning or activation request.

The service repository and the order management component may be one single entity, but in a preferred embodiment the service repository and the order management component are separated. Advantages for the separated construction are that changes or updates can be easily made into the service repository without affecting the provisioning and activation logic at all. A further advantage is that there is no need to test the provisioning and activation logic, when the configuration of the service repository is changed. The generic logic will remain the same independently from the provisioned and activated products and services.

In one embodiment, the service repository and the order management component are even run in different computer systems. In a further embodiment, the computer system running the management component comprises a replicate database replicating part of the service configuration data in the service repository. This replicate database can also be called as a function library and it preferably contains the information on the product-service-technical service chains with the relationships. This configuration increases response times in the system.

As is apparent from the above disclosure, the present invention can be applied in a great variety of applications requiring automatic, fast and accurate service provisioning and activation.

### Brief Description of Drawings

For a more complete understanding of the present invention and the advantages thereof, the invention is now described with the aid of the examples and with reference to the following drawings, in which:
Figure 1 presents a block chart of an example of data model used in service catalog according to an embodiment of the invention.
Figure 2 presents a block chart of an example delta calculation and activation and deactivation technical services in the system according to an embodiment of the invention.
Figure 3 presents a flowchart of a process according to an embodiment of the invention.
Figure 4 presents a block chart of an activation system according to an embodiment of the invention.
Figure 5 presents a block chart of an activation system according to another embodiment of the invention.
Figure 6 presents a block chart of relationships according to another embodiment of the invention.

### List of Some Terms Used in the Following Examples

BSS, Business Support System; CRM, Customer Relation Management; OSS, Operations Support System (400).
SID, Shared Information Model.
TMF, Tele Management Forum.
Product, P (112).
Customer facing service, service, S (122).
Resource facing service, technical service, TS (132).
Service repository, Catalog (450).
Provisioning and activation system comprises activation (420) and order management (410) components, Catalog (450) and preferably Network Element Interfaces (475) and all other internal and external interfaces (405, 416, 418, 475).
Request (402).
Order management (410).
Generic logic, generic workflow (412).
Function library (414).
Decomposition, one function in Function library (414).
Relations, relationship, there are two different relationships mentioned. Relationships between different logical levels (114, 124) and within one logical level (140).
Rollback, automated rollback, one function in Function library (414).
Delta, one function in Function library (414).
Activation component, Task execution (420).
Task repository (430).
Capability logic (432).
Capability template (434).
Network Element Interface (470).
Network Element (480).

### Best Mode for Carrying, Out the Invention

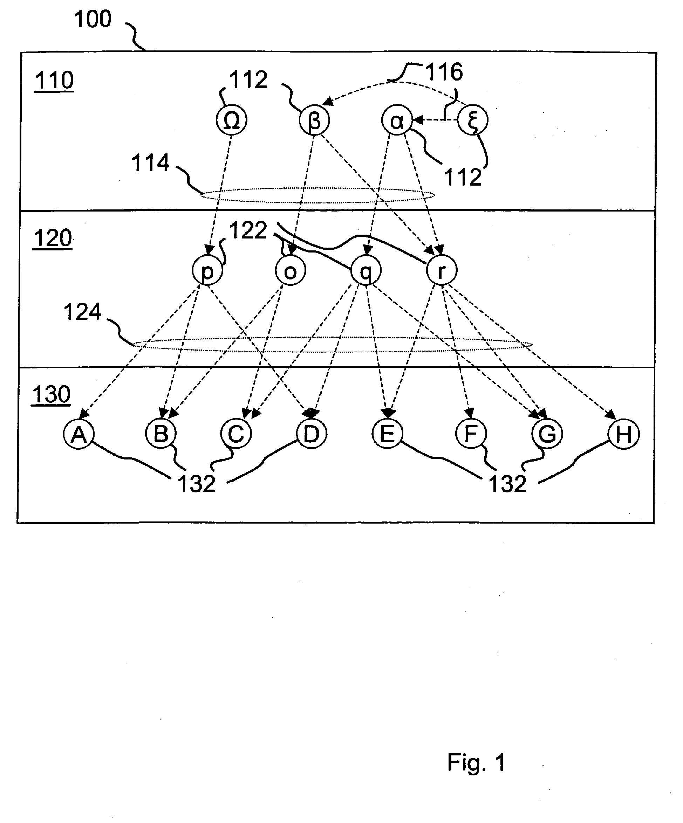

Figure 1 presents a hierarchical model 100 in three levels of network services. The Tele Management Forum (TMF) standardisation in the Shared Information model (SID) has defined a specification for product, customer facing service and resource facing service. The SID model, or any service specification with two or more logical abstraction layers, can be utilized in the embodiments of the invention. The Service Catalog is a central OSS repository to hold product specification into network level technical services. When a product or service specification is configured into the catalog, the relationships are defined between logical levels in the catalog (e.g Product to Service 114, Service to Technical Service 124 and vice versa). The logical level for products 110 contains all the specifications regarding to products 112. The logical level for services 120 contains all the specifications regarding to services 122. The logical level for technical services 130 contains all the specifications regarding to technical services 132.

The *Ω, β, α* and ζ are products 112, that need services 122 *p, o, q* and *r.* The services 122 need technical services 132 *A, B,* C, *D, E, F, G* and H. The product ζ has relations 116 to other products to highlight the flexibility that is required from the catalog. For example, the entities or levels in the catalog can be defined as follows:

Product 112 = a product or product bundle that is bought and assigned to a subscriber. For example "Talk a lot"-product. The catalog is the main repository for product information, which contains the price of the "Talk a lot"-product, fixed fees (e.g. monthly fee) and call tariffs. The product information can also be integrated with external system holding the master of product information (e.g. in CRM system).

Service 122 = a service that is assigned with the product ("Talk a lot") and is understandable by the subscriber. A service item is a building block for products. Service items are for example "GSM Voice", "GSM Data", "GSM GPRS", "Short Message Service", "Multimedia Service", "DSL" and "Email"-service.

Technical service 132 = a technical service or capability that is most atomic building block for services without going into details of the specific network. The technical services are defined as generic network element independent services supported by the network (operator's network elements). For example "HLR T11 voice service", "HLR T11 supplementary service for short message" or "LDAP Email service". Each technical service 132 is an independent entity and technical services may have only relations to each others (e.g. needs, not with) but not any workflow type of processing presentation, which would be impossible to dynamically interpret during the execution.

Subscription 150 = an information about the subscriber unique identifier and all the products 112 or services 122 assigned to him. This is not information about subscriber (which is located in the CRM system, e.g. address of the subscriber), but information about subscriber's subscriptions into entities configured into the catalog.

### According to the presented embodiment on a high level, it can be defined that:

The service catalog holds the specification of the service configuration - i.e. it defines how services are specified in generic network independent way, basically what must be touched when an operation is executed for a product.

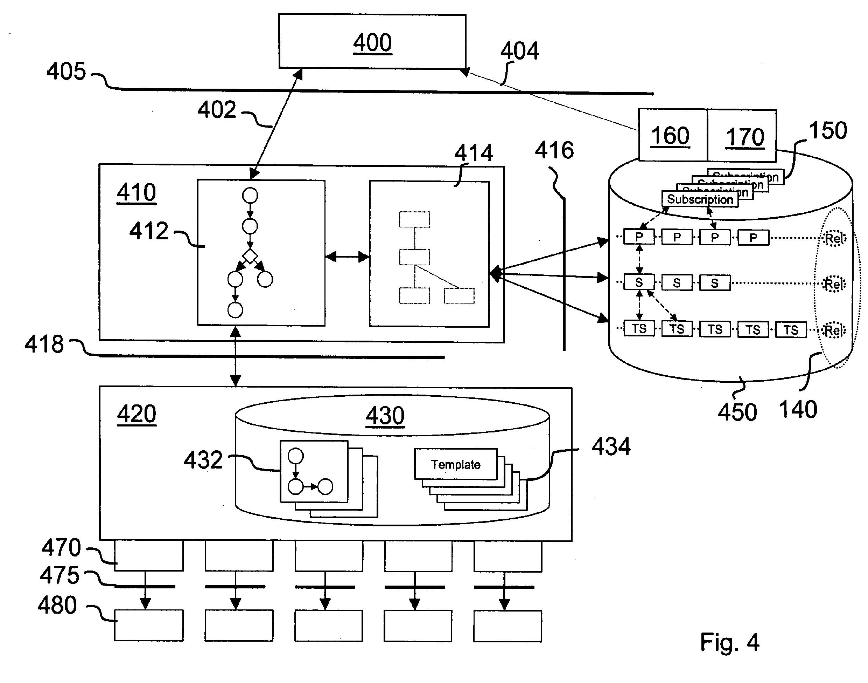

The provisioning request order manager (such as order management component 410 in the embodiment of Fig. 4) holds the process definition - i.e. it defines generic process how an activation order is decomposed into technical services through a catalog and processed into network level. It can be stated that during the runtime, the generic process is dynamically driven by the service specification from the catalog. So the workflow in the activation product defines how the decomposition and execution is made.

The provisioning and activation system preferably holds all the network element specific data in a repository (can be referred as a capability repository, or a capability template 434 in the embodiment of Fig. 4) used to convert generic technical feature into network element specific tasks or workflow. The generic and network independent dynamically received data from the catalog is converted using the data from the capability repository into network element specific operations, which can be targeted to a physical network element or elements through network elements specific interface layer.

According to another embodiment of the invention an example of activation of "Talk a lot"-product is presented.

The example is on a high level and without real parameter values in order to make the example more readily understandable.

The Customer Care sends a request into provisioning or activation system.

### Request:

Operation = Activate
Product = "Talk a lot"

The request will be executed though the provisioning logic, which contains steps for Product, Service and Technical Service management. Thus, the logic contains several levels: product level, service level and network specific data repository level.

In the product level, system will decompose the product into services
- IN:: Operation = Activate
Product = "Talk a lot"
- OUT:: Operation = Activate
Services = "GSM Voice", "GSM GPRS", "SMS"

The information is passed to the service level, which decomposes the services into referred resources.
- IN:: Operation = Activate
Services = "GSM Voice", "GSM GPRS", "SMS"
- OUT:: Operation = Activate
Resources = "GSM Basic Service T11 ", "GSM GPRS", "GSM GPRS APN",
"GSM Supplementary Services Basic", "SMS"

On the network element specific data repository level, the generic technical services are mapped into services or capabilities, which can be a function specific workflow or network element specific tasks.
- IN:: Operation = Activate
Resources = "GSM Basic Service T11", "GSM GPRS", "GSM GPRS APN",
"GSM Supplementary Services Basic", "SMS"
- OUT:: Task 1 = NE_ID = fnr1
NE_TYPE = FNR
MSISDN1 = 8728725325
REQ_TYPE=4
REQ_OBJ=1
- Task 2 =: NE_ID=Task1.TARGET
NE_TYPE = HLR
MSISDN1 = 8728725325
IMSI1 = 2352352523
BASIC_SERVICE = T11
REQ_TYPE=1
REQ_OBJ=1
- Task 3 =: NE_ID = Task1.TARGET
NE_TYPE=HLR
MSISDN1 = 8728725325
IMSI1 = 2352352523
SUP_CODES = G01000
REQ_TYPE=1
REQ_OBJ=1
- Task 4 =: NE_ID=Task1.TARGET
NE_TYPE = HLR
MSISDN1 = 8728725325.
IMSI1 = 2352352523
SUP_CODES = 081001
APN = "12.15.163.153"
REQ_TYPE=1
REQ_OBJ=1
- Task 5 =: NE_ID = Task1.TARGET
NE_TYPE=HLR
MSISDN1 = 8728725325
IMSI1 = 2352352523
SUP_CODES=04100
REQ_TYPE=1
REQ_OBJ=1
- Task 6 =: NE_ID = sms 1
NE_TYPE=SMS
MSISDN1 = 8728725325
SERVICE = SMS
REQ_TYPE=1
REQ_OBJ=1

After the task decomposition, the system has the information required for executing tasks on the network layer through a network element specific interface modules. Next step is the execution of tasks into network elements.

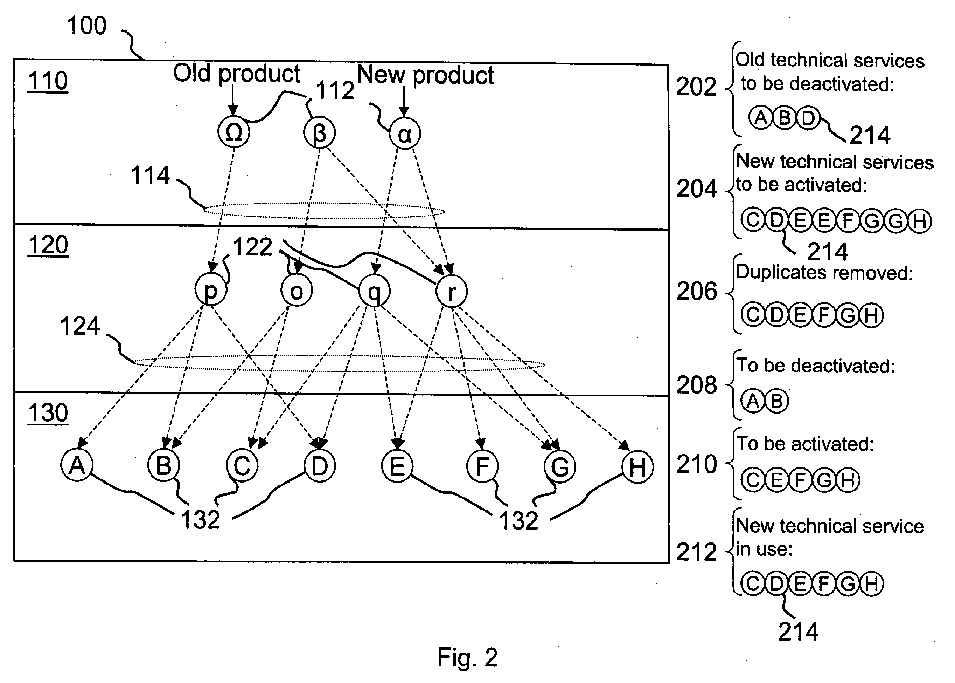

In figure 2 there is presented a situation when a subscriber wants to changes from one product to another product.

The modifications on technical service level need both activation and deactivation operations. Also in some cases deletion, parameter changing or other similar operations are needed.

In order to fully take advantage of service catalog, the Customer Care BSS is able to provide old already active (in the example figure 2: the product Ω) and new to be activated (in the example figure 2: the product α) product information in the modification operation or old already activated product information can be derived from the subscription data in the catalog (if subscription data present in the catalog). From this information the system offers:
1) On the Product to Service level:
   - extract all the services to be deactivated (in the example: p) 202
   - extract all the services to be activated (in the example: q and r) 204
2) On the Service to technical service level it identifies if the same services are used for the different products. This leads to make a delta function from the Service level into technical service level and only create references to:
   - evaluate from upper level the old technical services to be deactivated (in the *example: A, B* and D) 202.
   - evaluate from upper level the new technical services to be activated (in the example: *C, D, E, E, F, G*, *G* and *H* 204; Remove duplicates => *C, D, E, F, G* and *H;* 206).
   - deactivate technical services that are not used by the new product (in the example: A and *B)* 208.
   - activate technical services that are not yet active (in the example: *C*, *E, F, G* and *H*) 210.
   - do nothing for technical services that are the same in the old and new product (in the example: D) 214.
   Send referred technical services to network element specific data repository level
3) On the network element specific data repository level:
   - extract all the technical services to be deactivated into capabilities or functionalities, which can be function specific workflows or network element specific tasks.
   - extract all the technical resources to be activated into capabilities or functionalities, which can be function specific workflows or network element specific tasks 212.

One advantage of the above-described embodiment compared to known solutions is that instead of first deactivating the whole product and then activating the new product, the system is able to constitute a delta function between the products and only activate and deactivate the changing resources between the products. This minimises the communication into network elements over typically slow network connections and thus speeds up the provisioning overall process.

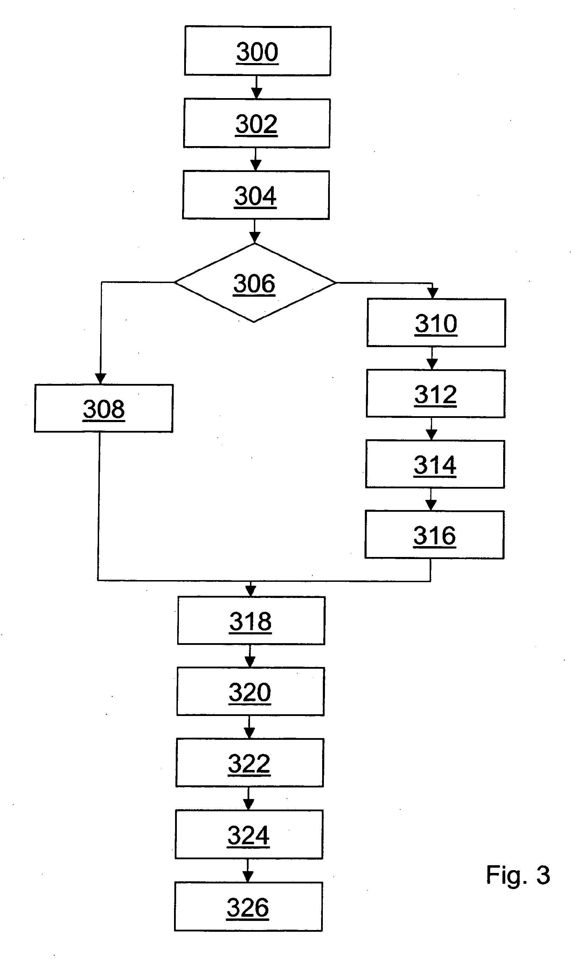

In figure 3 according to one embodiment of the invention, the overall process how an activation can be made when a catalog is used together with activation product can be defined as follows:
300 BSS system identifies that a new product has to be assigned with a user (e.g. user orders a new product) or a completely new subscriber, starting to use a product, has to be activated or product has to be removed from the subscriber already having a product.
302 BSS system sends an order to activation or order management system. Order contains information about the subscriber unique identifier and product(s) to be assigned with subscriber as well as the operation (e.g. activate).
304 The order management (or activation) system has a workflow that defines how an order must be processed.
306 The order management system asks data from the catalog either in bits or directly as a decomposition into technical services to be executed, so the operations are either:
308 The order management system provides information about subscriber, product and desired action to catalog. The catalog makes the decomposition into technical services needed to be processed and delivers a list of technical services, operations and their relations (e.g. execution order) to be processed for the order management system.

Or
310 The order management system asks from catalog what products subscriber already has if the subscription data is stored into the catalog. The order management system provides information about subscriber into catalog, which provides information about all the subscriptions, i.e. what products subscriber also has subscription to. If subscription data is not stored into the catalog, the system should preferably provide old, already activated products for the catalog to be used for a delta calculation based on the request from the BSS systems.
312 The order management system asks from catalog decomposition from products into services. The order management system provides information about new products plus operations and current products for the catalog, which provides decomposition to services and operations taking into account what services are needed for the desired product set for a subscriber.
314 The order management system asks from catalog decomposition from services into technical services. The order management system provides information about services plus operations (the data from the previous decomposition) to catalog, which provides decomposition to technical services and operations.
316 The order management system asks the relation of technical services from catalog. The order management system provides technical services and operations to be processed into catalog, which provides information of relations for the technical services (e.g. execution order).

After the decomposition (either of the options), the order management system has a set of technical services, operations for each technical service and relations of them.
318 The order management system pushes information (technical services, operations, relations) to execution (activation to internal layer, order management into activation system).
320 The activation makes conversion of generic technical services into network element specific operations defined in the network element specific data repository. The operations can be atomic targeted to a single network element or a flow of operations touching multiple network elements (workflow that defines how operation for a technical service is executed). The conversion can be made for example through rules, lookup tables or repository that contains transformation data from a generic technical service operation into network element specific and activation system specific presentation of operations.
322 The network element specific operations are executed into network through network element adapters / interface modules, which can connect to network element and convert activation specific operation into network element specific command(s). The response is interpreted to be either successful or failed for a network element specific operation. These responses are then interpreted into status of operation for a technical service (e.g. successful or failed).
324 When all the technical services are executed, the activation system has a status of execution for each technical service and is thus able to either provide this information to order management system, which then updates the product status of subscription data into catalog, or activation system can interpret status of technical service execution into status of product processed and update the subscription data part into catalog.
326 The response is generated from the order management system into BSS system (e.g. CRM system).

This defines the normal processing workflow. All the abnormal processing situations should preferably be managed also by the processing workflow. For example in case there are problems in the execution of technical services, the activation process should preferably be capable to process the rollback operations. This means either removing a technical service already activated or updating the service parameter values into values before the execution started.

Furthermore, other functions like deactivation, deletion, modification and display are likewise possible to implement with the aid of the invention and the embodiments thereof.

In a preferred embodiment of the invention, the provisioning and activation flow and the catalog are separated. Advantages for this type of approach are that changes or updates can be easily made into the service catalog without affecting the provisioning and activation flow at all. A further advantage is that there is no need to test the provisioning and activation flow, when a service catalog configuration is changed. The generic provisioning workflow will remain the same independently from the provisioned and activated products and services. Also catalog specific user interfaces can be made more easily and also e.g. the OSS/J Inventory API can be implemented as a completely separate from the provisioning logic based on the data from the catalog.

In another embodiment of the invention the different technical services have relations between each others. For example some technical services have to be activated before some other resource - one simple example would be mobile subscriber with short message service. The subscriber has to be first activated into HLR before issuing activation commands into SMSC. All the technical services can be thought as a pool of technical services. In case there is a relation with some of the technical services in the pool, this can be defined for example with a priority of technical service or as a direct relationship between technical services.

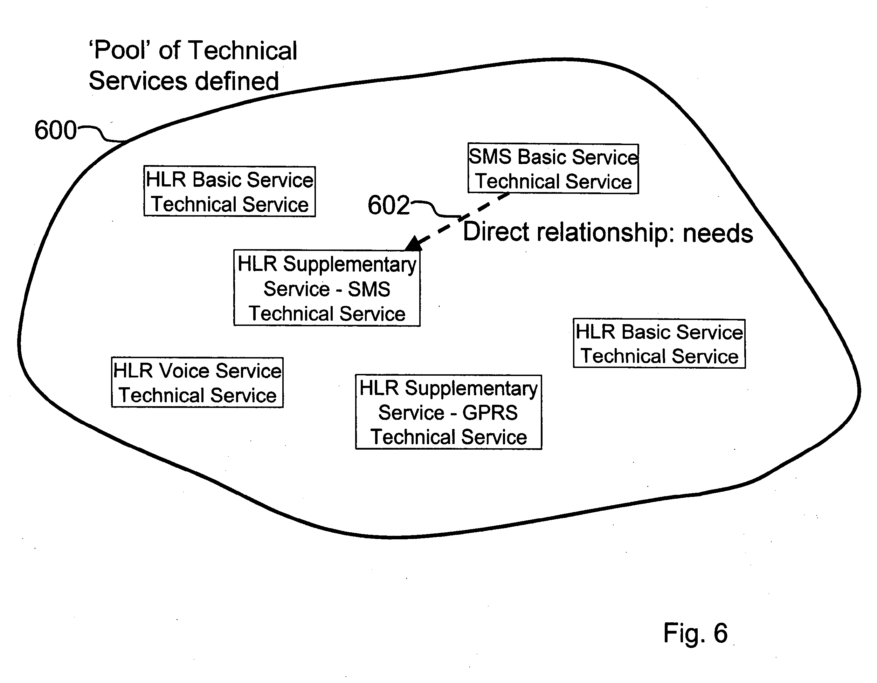

In figure 6 the technical service defined into the catalog, referred as a pool 600 of available technical services, have direct relationships. The *`SMS Basic Service'* needs *`HLR Supplementary Service - SMS'* in order to work 602. From the activation point of view the needed entity must be activated first before the entity needing it can be activated.

The limitation why execution order cannot be defined on the service layer is that delta of the modification is managed dynamically. There will be indefinite number of delta combinations, so all the relations between technical services should preferably be managed on the technical service layer from the activation point of view. There can still be relations defined, for example, on the service or product layer. But the information can be used to guide the person using the user interface to configure valid configurations.

In figure 4 the entities of an embodiment of the invention are presented.

The embodiment comprises of the following components constituting the whole provisioning and activation system:
450 An entity holding a service configuration / specification (catalog). The catalog contains all kind of information regarding products 112, services 122 and technical services 132. There are also determined all the relationships between the products and services 114 and services and technical services 124 in the catalog. The catalog can also contain information regarding to different main functions like e.g. provisioning, activation, mediation, rating and charging purposes. This information can be for instance parameter mappings, relations, prices, tariffs, campaigns, etc. The relationships or dependencies (e.g. needs, not with, etc.) on same logical level are also presented 140.
410 An entity holding a workflow for generic activation process (e.g. request order management component). This entity can be called order management. According to an embodiment of the invention the order management contains all logic 412 that is needed to receive a request 402 from BSS system 400, decompose the request 402 according to relationships between both products and services 114 and services and technical services 124 in catalog 450, to communicate with activation system about technical services to be touched in the activation process.
414 An entity capable to interpret and process the data from the service configuration / specification catalog and provide functionalities used and needed by the generic workflow 412 process for activation. The catalog 450 may contain lot of data, for example regarding products, that is not relevant from the activation process point of view (e.g. price, campaigns, different tariffs, etc.), thus the entity only uses and provides data needed by the activation workflow. In a preferred embodiment of the invention the order management component 410 may contain also a function library 414, in which the relevant information from catalog is replicated. The relevant information is the Product-Service-Technical Service chain with relationships. This gives remarkable advantage for processing the workflow in an increased response times. In case the service configuration in the catalog is updated, the information is delivered by the catalog to the entity and replication information can be reloaded or updated. The Function library 414 contains also the main functions like decomposition rules, relationship management, rollback, delta, etc.
420 An entity making translation from generic service description (the lowest level entity in the catalog, e.g. technical service) into network element specific operation or operations or workflow and execute them (e.g. activation component). This entity contains predefined capability templates 434 and capability logic 432 how the technical services should be executed to each network element 480. The capability templates 434 are the most atomic commands, usually containing only one command or task to be executed. The operations can be invoked into network elements 480. In an embodiment of the invention the capability templates are stored in a network element specific data repository 430. The capability logic 432 comprises of rules or flow including referring to several capability templates 434. The capability logic 432 defines complex operations that can be invoked to a set of network elements 480. Furthermore the capability logic 432 uses network element specific data repository abstractions. The advantage of abstractions are that they easies the configuration substantially by defining the input data needed to invoke operation though a network element interface module 470, while the details are managed by the network element interface module.
400 Business Support System (BSS) initiates the whole process. In BSS there are several independent systems like Customer Management, Billing, Planning, etc.
405, 416, 418, 475 Application Program Interfaces (API)
470 Network Element Interfaces (NEI) make conversion from activation system's internal task into network element specific commands.
480 Network Elements (NE) implements the service bought by a subscriber technically on the network layer.

The catalog 450 holds the specification of the services. The catalog can have any levels depending on the implementation. Typically two level product or service catalogs have been defined for billing purposes. However there could be also more levels. According to another embodiment of the invention the most critical from the provisioning and activation point of view is the lowermost level. The reasons for this are following:
1. All the entities in the lowermost level should preferably be independently executable in order to enable dynamic decomposition from the upper layers.
2. The only relation between entities in the catalog may be a direct, e.g. needs, not with, which can be dynamically interpreted during the decomposition. During the decomposition from a higher level entity into lowermost entity, it can not be explicitly stated during configuration what will be the set of lowermost entities. Thus rules should preferably be dynamically interpretable (not workflows) during the execution of process.
3. There is very difficult to define workflows on any level on the catalog. Because the lowermost entities referred during execution can be arbitrary set, it's not possible to define a predefined workflow for every arbitrary set of entities in the catalog (including all the levels defined in the catalog).
4. The executable for lowermost entity in the catalog may be atomic (one operation to element) or set of operations to multiple network elements or workflow that is executed and can invoke operations to multiple elements. The main requirement for the lowermost entity is that there is single logical result for the entity (namely failed, successful). The lowermost entity (abstract service) in the catalog is linked into executables presented in the activation module (in the network element specific data repository).

In another embodiment of the invention there can also be used separated order management component and provisioning and activation component. In this situation the order management component uses the upper levels (i.e. subscription, if available, product and service) of service repository. The provisioning and activation component uses the lower levels (i.e. services and technical services) to execute the technical decomposition and execute the operations into the network elements through

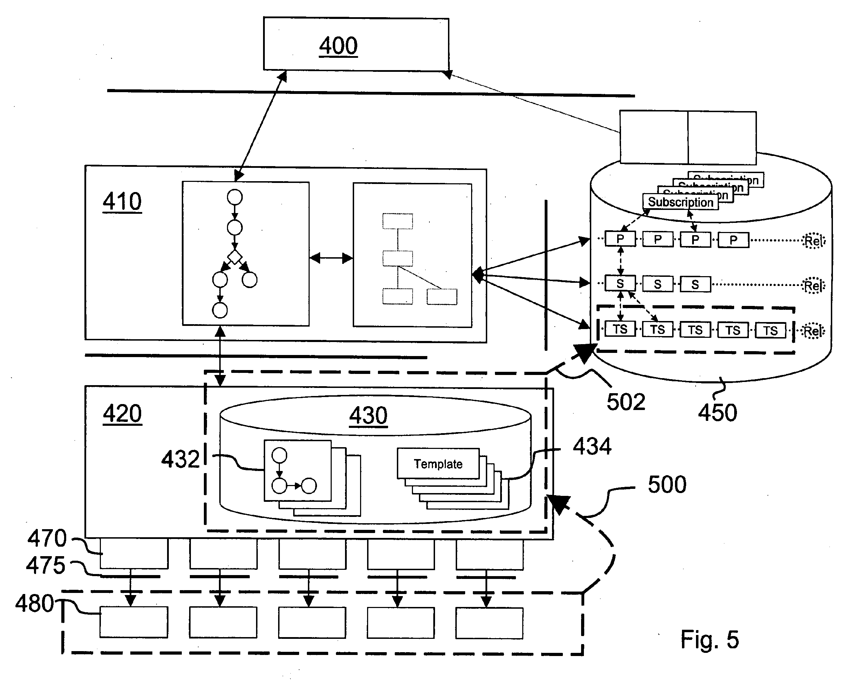

In figure 5 a process for defining the technical services into the catalog is highlighted. The technical capabilities of the network are defined by the network elements 480. Thus from the network elements 480, it's possible to derive through the network element interface API 475 the functions that can be executed into the network element 500. The network element specific data repository 430 can be populated with the templates 434 defining the operations that can be supported by the network elements 480. The template defined the data to be send into network element interface module 470 in order to invoke operation in the network element 480. It also defines the dynamic runtime data needed in order to invoke the operation. The information in the template is network element specific, but the data needed to invoke the operation should preferably be defined in generic and network element independent way. The interface into templates defines the generic operations that can be used by the catalog 502. The minimum set of activation and deactivation generic operations define a technical service 132 that can be presented in the catalog 450. In case the logical operation can not be defined by one template, but it's a set of operations into multiple network elements, it can be defined as a workflow 432, which provides similar API to be used by the technical services in the catalog 502.

In another embodiment of the invention, it is mentioned that the system supports automated rollback. The rollback can be fulfilled with two alternative methods; counter operations or forced subscription setting. The counter operations can be used mainly for activation operations, when some set of technical services is being activated and one of the activations fails, the system can automatically rollback by invoking deactivate operations for all activations already made successfully. The second way can be used also for modifications and deletions, but requires catalog to store information about subscriptions of a subscriber with the history data. Thus system can force the subscriber's subscription into the same status it was before the activation process was invoked.

Refering now to Figure 4, we further describe some embodiments of the invention. In Figure 4, there is shown a business support system 400 and a plurality of network elements 480. In between the business support system 400 and the network elements 480, there is a service provisioning and activation system. The service provisioning and activation system comprises a service repository 450 containing service configuration data. The system comprises also an order management component 410, which includes a generic logic 412 for service provisioning and activation operations. In the configuration shown in the Figure, the order management component 410 includes also an operation specific functionalities module 414 comprising operation specific functionalities capable of using data from the service repository 450.

In operation, the order management component 410 receives a provisioning or activation requests from the business support system 400 and processes the received requests according to the generic logic 412. The processing is arranged such that the generic logic 412 calls the operation specific functionalities in the operation specific functionalities module 414 whenever needed. Hence, in this embodiment, the generic logic 412 uses data in the service repository 450 only through the operation specific functionalities in the operation specific functionalities module 414. This hierarchy of logic and functions facilitates both the maintenance of the system and also the reconfiguration of the generic logic whenever needed. By means of this configuration, the system can perform a request-specific series of operations based on the received request and the data from the service repository without the need of programming specific individual workflows for each different service activation, deactivation and modification situation possible in the telecommunications network.

The system of Figure 4 comprises also a task execution component 420 and a plurality of network element interface modules 470 for respective network elements 480.

In one possible configuration, the order management component 410 is responsive to a provisioning or activation request to determine a task list comprising a list of modifications in the technical services or capabilities for the subscription that are necessary on the basis of the provisioning or activation request. The order management component 410 submits this list to the task execution component 420, which executes the tasks in the task list via the relevant network element interface modules 470. In this process, the task list is translated into network-element-specific operations to be performed in the telecommunications network elements 480 in order to implement the provisioning or activation request.

The service provisioning and activation system of Figure 4 includes three different computer systems connected to each other via telecommunications connections. One computer system runs the order management component 410, another computer system runs the service repository 450 and the third computer system runs the task execution component 420 and the network element interface modules 470.

The above description is only to exemplify the invention and is not intended to limit the scope of protection offered by the claims. The claims are also intended to cover the equivalents thereof and not to be construed literally.

## Claims

1. A service provisioning and activation system in a telecommunications network, comprising:
a service repository for service configuration data, which comprises data on telecommunications products or services provided by the telecommunications network,
an operation specific functionalities module comprising operation specific functionalities capable of using data from the service repository, and
an order management component comprising a generic logic for service provisioning and activation operations, the order management component being operative to receive a provisioning or activation request from a business support system and process the received request according to the generic logic, the generic logic being further operative to call the operation specific functionalities in the operation specific functionalities module in order to perform a request-specific series of operations based on the received request and the data from the service repository.

2. The system of claim 1, wherein the service configuration data in the service repository comprises, for each of the telecommunications products or services, data on technical services or capabilities offered by the telecommunications network that are necessary in order to provide said telecommunications product or service.

3. The system of claim 1 or 2, wherein the service configuration data in the service repository includes data on subscriptions that are in activated state in the telecommunications network.

4. The system of claim 3, wherein the service configuration data in the service repository relates each of the subscriptions to the respective telecommunications products or services that are in activated state for said subscription.

5. The system according to any of claims 2 to 4, wherein the service configuration data in the service repository is arranged according to the Shared Information Data model (SID).

6. The system according to any of claims 2 to 5, wherein the provisioning or activation request from the business support system indicates a subscription and a desired operation for the subscription on a product and/or service level.

7. The system of claim 6, wherein the service provisioning and activation system is responsive to the provisioning or activation request to determine a task list comprising a list of modifications in the technical services or capabilities for the subscription that are necessary on the basis of the provisioning or activation request.

8. The system of claim 7, comprising a task execution component and a plurality of network element interface modules for respective network elements, wherein the task execution component is operative to execute the tasks in the task list via the relevant network element interface modules, whereby the task list is translated into network-element-specific operations to be performed in the telecommunications network elements in order to implement the provisioning or activation request.

9. The system according to any of claims 1 to 8, comprising decomposition functionalities operative to decompose a service description on a product level or a service level into a corresponding service description on a technical services or capabilities level.

10. The system according to any of claims 1 to 9, wherein the operation specific functionalities include a relationship functionality capable of arranging the technical services or capabilities in a correct order of activation, deactivation or modification based on the technical relationships between said technical services or capabilities.

11. The system according to any of claims 1 to 10, wherein the operation specific functionalities include a rollback functionality capable of restoring the status of the subscription valid at the moment of receipt of the provisioning or activation request.

12. The system according to any of claims 1 to 11, comprising an update functionality operable to update the service configuration data in the service repository in response to a successfully performed provisioning or activation operation.

13. The system according to any of claims 1 to 12, comprising a delta functionality operable to determine the minimum changes in the technical services or capabilities that are necessary in order to implement the provisioning or activation request.

14. The system of claim 13, wherein the delta functionality is operable to
determine the technical services or capabilities in an active state in the telecommunications network based on the service configuration data in the service repository,
determine the technical services or capabilities that are needed for the products and/or services that should be active after the change defined in the provisioning or activation request, wherein this determination is based on the provisioning or activation request and the service configuration data in the service repository, and
determine the technical services or capabilities delta, i.e. the changes needed in order to change the group of presently active technical services or capabilities into the group of technical services or capabilities that should be active after the change defined in the provisioning or activation request.

15. The system according to any of claims 1 to 14, comprising
a plurality of network element interface modules in communication with the respective network elements of the telecommunications network, and
a task execution component in communication with the order management component and the plurality of network element interface modules, wherein
the order management component is operative to produce a set of necessary generic operations on the basis of the provisioning or activation request and the service configuration data, and to submit the produced set of generic operations to the task execution component,
the task execution component is responsive to the submitted set of generic operations to convert the generic operations into network-element-specific operations and to distribute the network-element-specific operations to the respective ones of the plurality of network element interface modules, and
the network element interface modules are operative to convert the network-element-operations into network-element-specific commands and to submit said commands to the respective telecommunications network elements.

16. The system of claim 15, wherein the task execution component is operative to derive from the network elements information on the capabilities offered by said elements, and based on the derived information, to provide the service repository with up-to-date information on the technical services or capabilities available in the telecommunications network.

17. The system according to any of claims 1 to 16, wherein the operation specific functionalities module is comprised by the order management component.

18. The system of claim 17, wherein the order management component comprises a replicate database replicating part of the service configuration data in the service repository.

19. The system of claim 17 or 18, comprising
a first computer system operable to run the service repository, and
a second computer system operable to run the order management component.

20. A method of operating a service provisioning and activation system in a telecommunications network, which system comprises a service repository containing service configuration data, an operation specific functionalities module with operation specific functionalities capable of using data in the service repository, and an order management component containing a generic logic for service provisioning and activation operations, the method comprising:
receiving and interpreting a provisioning or activation request from a business support system, and
responsive to the request, processing through the generic logic in the order management component based on the information in the request, said processing comprising calling operation specific functionalities in the operation specific functionalities module and making use of the service configuration data in the service repository via said called operation specific functionalities.

21. The method of claim 20, comprising automatically determining the changes necessary in the technical services or capabilities of telecommunications network for implementing the received provisioning or activation request.

22. The method of claim 20 or 21, wherein the received provisioning or activation request concerns an activation of at least one new product or service for a subscription and the method comprises
determining the technical services or capabilities for the subscription that are in an activated state in the telecommunications network,
determining the technical services or capabilities necessary for implementing the received request, and
activating the technical services or capabilities for the subscription that are necessary for implementing the received request and are not in an activated state in the telecommunications network.

23. The method of claim 22, wherein the determining of the activated technical services or capabilities comprises
retrieving from the service repository a listing of the products or services in activated state for the subscription, and
decomposing the listing into a list of the technical services or capabilities necessary to provide the products or services in activated state.

24. The method of claim 22 or 23, comprising
forming a first group of technical services or capabilities consisting of the technical services or capabilities for the subscription that are already in an activated state in the telecommunications network,
forming a second group of technical services or capabilities consisting of the technical services or capabilities necessary for implementing the received request,
forming a third group of technical services or capabilities consisting of all the technical services or capabilities appearing in the second group but not in the first group, and
performing the activation exclusively with regard to the technical services or capabilities appearing in the third group.

25. The method according to any of claims 22 to 24, comprising arranging the technical services or capabilities to be activated into an activation order taking into account the technical relationships between the technical services or capabilities, and activating the technical services or capabilities in the arranged activation order.

26. The method of claim 20 or 21, wherein the received provisioning or activation request concerns a deactivation of at least one of the existing products or services from a subscription, and the method comprises
determining a deactivation group, i.e. the group of technical services or capabilities for the subscription that are necessary for the at least one product or service to be deactivated,
determining a remaining services group, i.e. the group of technical services or capabilities for the subscription that are necessary for the existing products or services not to be deactivated, and
deactivating only the technical services or capabilities for the subscription that are members of the deactivation group and not members of the remaining services group.

27. The method of claim 26, wherein the determining of the deactivation group comprises decomposing the at least one service or product to be deactivated into a list of the technical services or capabilities necessary to provide said at least one service or product.

28. The method of claim 26 or 27, wherein the determining of the remaining services group comprises
retrieving from the service repository a listing of the products or services in activated state for the subscription,
removing from the listing the at least one service or product to be deactivated, and
decomposing the listing into a list of the technical services or capabilities necessary to provide the products or services in activated state.

29. The method of claim 20 or 21, wherein the received provisioning or activation request concerns a change in the set of products or services provided for a subscription, and the method comprises
determining the technical services or capabilities in an activated state for the subscription in the telecommunications network,
determining the technical services or capabilities that are needed for the products and/or services that should be in activated state after the change defined in the provisioning or activation request, and
determining the technical services or capabilities delta, i.e. the changes needed in order to change the group of presently activated technical services or capabilities into the group of technical services or capabilities that should be in activated state after the change defined in the provisioning or activation request.

30. The method of claim 29, wherein
the step of determining the technical services or capabilities in activated state in the telecommunications network comprises retrieving from the service repository a listing of the products or services in activated state for the subscription, and decomposing the listing into a list of technical services or capabilities necessary to provide the products or services in activated state,
the step of determining the technical services or capabilities that should be in activated state after the change comprises retrieving from the service repository a listing of the products and/or services that should be in activated state, and decomposing the listing into a list of technical services or capabilities necessary to provide said products and/or services, and
the step of determining the technical services or capabilities delta comprises comparing the lists and on the basis of the comparison, providing a list of technical services or capabilities that must be activated and a list of technical services or capabilities that should be deactivated.

31. The method of claim 29 or 30, comprising arranging the technical services or capabilities to be activated and deactivated into a processing order taking into account the technical relationships between the technical services or capabilities, and activating and deactivating the technical services or capabilities in the arranged processing order.

32. The method according to any of claims 21 to 31, comprising decomposing the changes necessary in the technical services or capabilities into the respective network element tasks.

33. The method of claim 32, comprising executing the network element tasks into the network elements through network element interface modules.

34. The method according to any of claims 20 to 33, comprising
monitoring network elements of the telecommunications network,
on the bases of said monitoring, constructing data on the technical services or capabilities available in the telecommunications network, and
updating the data in the service repository on the bases of said constructed data on the technical services or capabilities available in the telecommunications network.

35. The method according to any of claims 20 to 34, comprising replicating at least part of the service configuration data from the service repository to the order management component.

36. A computer program product comprising computer program code operable to instruct a computer system to perform the method according to one of the claims 20 to 35.

37. A method of using the service provisioning and activation system according to one of the claims 1 to 19, to provide a business support system with a business-level view of the services in activated state for a subscription of interest in the telecommunications network.

38. A method of using the service provisioning and activation system according to one of the claims 1 to 19, to implement in the telecommunications network a business-level request by a business support system requesting at least one change in the services provided for a subscription of interest.
